(19) Europäisches Patentamt
European Patent Office
Office européen des brevets

(11) Veröffentlichungsnummer: **0 017 905**
**B1**

(12) # EUROPÄISCHE PATENTSCHRIFT

(45) Veröffentlichungstag der Patentschrift: **12.10.83**

(51) Int. Cl.³: **C 08 G 18/38**

(21) Anmeldenummer: **80101887.0**

(22) Anmeldetag: **09.04.80**

(54) **Neue Polyurethanharnstoffe mit Schwefel enthaltenden aromatischen Harnstoffgruppen und Verfahren zu ihrer Herstellung.**

(30) Priorität: **20.04.79 DE 2916139**

(43) Veröffentlichungstag der Anmeldung: **29.10.80 Patentblatt 80/22**

(45) Bekanntmachung des Hinweises auf die Patenterteilung: **12.10.83 Patentblatt 83/41**

(84) Benannte Vertragsstaaten: **BE DE FR GB IT**

(56) Entgegenhaltungen:
**GB-A-1 051 144**
**US-A-3 897 400**

(73) Patentinhaber: **BAYER AG, Zentralbereich Patente, Marken und Lizenzen, D-5090 Leverkusen 1, Bayerwerk (DE)**

(72) Erfinder: **Schwindt, Jürgen, Dr., Kleist-Platz 4, D-5090 Leverkusen (DE)**
Erfinder: **Grögler, Gerhard, Dr., von-Diergardt-Strasse 46, D-5090 Leverkusen (DE)**
Erfinder: **Uhrhan, Paul, Dr., Brunnenweg 27, D-5068 Odenthal (DE)**
Erfinder: **Meyborg, Holger, Dr., Bergstrasse 92, D-5068 Odenthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# Neue Polyurethanharnstoffe mit Schwefel enthaltenden aromatischen Harnstoffgruppen und Verfahren zu ihrer Herstellung

Die vorliegende Erfindung betrifft neue Polyurethankunststoffe, die unter Verwendung von speziellen, Schwefel enthaltenden aromatischen Diaminen als Kettenverlängerungsmittel hergestellt wurden.

Die Verwendung aromatischer Diamine als Kettenverlängerer bei der Herstellung von Polyurethanen ist bekannt. Um angemessene Verarbeitungszeiten zu gewährleisten, setzt man die technisch meist verwendeten reaktionsfähigen aromatischen Isocyanate zweckmässigerweise mit träge reagierenden Diaminen um. Als träge reagierende Diamine haben sich vor allem solche aromatischen Diamine bewährt, deren Basiszität und damit auch Reaktivität gegenüber Isocyanaten durch Einführung von Halogen- oder Carboxy-Substituenten herabgesetzt wurde. Als Beispiel sei das bisher am meisten verwendete 3,3'-Dichlor-4,4'-diaminodiphenylmethan (MOCA) genannt. Der Hauptnachteil dieser Verbindung ist jedoch ihre hohe Toxizität.

Im US-Patent 3 823 833 ist vorgeschlagen worden, als Kettenverlängerer bei der Herstellung von Polyurethanharnstoffen 2,2'- oder 4,4'-Diaminodiphenyldisulfid zu verwenden. Der Nachteil dieser Verbindungen liegt jedoch in der Anfälligkeit der S-S-Gruppierung im Polyurethansegment gegenüber reduktiver oder oxidativer Spaltung und in den kurzen Topf- und langen Formstandzeiten von Reaktionsgemischen aus den Diaminen und Polyisocyanaten, was eine wirtschaftliche Verarbeitung sehr erschwert.

In der japanischen Offenlegungsschrift 9195/70 wird eine konzentrierte Polyurethanlösung beschrieben, die zur Herstellung von Fasern, Filmen oder Kunstleder verwendet werden kann. Als Kettenverlängerer kommt dabei ein Diamin der Formel $NH_2-R-(SR)_n-NH_2$ zum Einsatz, wobei R einen zweiwertigen aliphatischen, aromatischen, aliphatischen oder heterocyclischen Rest darstellt und n = 1 oder 2 ist.

Der Hauptnachteil eines mit derartigen Diaminen verlängerten Systems ist die wegen der zu hohen Reaktivität der Aminogruppen gegenüber Isocyanaten notwendige Mitverwendung eines organischen Lösungsmittels, was beträchtlich die Kosten erhöht, zusätzliche Absaugvorrichtungen erfordert und auch Feuer- und Explosionsgefahr mit sich bringt.

Im US-Patent 3 920 617 wird vorgeschlagen, schwefelhaltige Polyamine der Formel

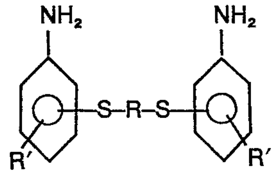

als Kettenverlängerungsmittel bei der Herstellung von Polyurethankunststoffen zu verwenden.

Im Temperaturbereich von 25 bis 60 °C bewirkt dieser Verbindungstyp zwar eine ausreichende lange Verarbeitungszeit eines Reaktionsansatzes aus NCO-Vorpolymeren und Diaminen, ergibt jedoch wegen der bei diesen Verarbeitungstemperaturen zu hohen Viskositäten der üblichen NCO-Präpolymeren (NCO-Gehalt ca. 2,8 bis 3,9 Gew.-%) nur unzureichend vernetzte, inhomogene Elastomerkörper. Im technisch günstigen Verarbeitungsbereich von 80 bis 110 °C verringert sich jedoch der auf die $NH_2$–Gruppen wirkende basizitätsvermindernde Einfluss der an den aromatischen Ring gebundenen Schwefelatome sehr stark, so dass die Topfzeit der Reaktionsgemische erheblich verkürzt wird.

In der russischen Veröffentlichung Vysokomol Soedin. Ser. B. 9 (6) 456–9 wird die Herstellung von Polyharnstoffen aus symmetrischen Diaminodiphenylsulfiden, Diaminodiphenylsulfoxiden bzw. Diaminodiphenylsulfonen und Hexamethylendiisocyanat beschrieben. Es wurde dabei gefunden, dass die Reaktivität der $NH_2$–Gruppen gegenüber NCO–Gruppen mit steigendem induktivem Effekt in der Reihe $S < SO < SO_2$ abnimmt.

Im US-Patent 3 897 400 wird vorgeschlagen, als Kettenverlängerungsmittel bei der Herstellung von Polyurethanen 4,4'-Diaminodiphenylsulfid zu verwenden. Nachteilig ist jedoch wieder die sehr kurze Topfzeit im Gemisch mit NCO-Präpolymeren, die nur eine Verwendung bei tiefen Temperaturen zulässt. Die Aushärtung bei 25 °C dauert anderseits jedoch ca. 16 h.

Der Erfindung liegt die Aufgabe zugrunde, die oben beschriebenen Nachteile der bekannten Diamin-Kettenverlängerer und der daraus herstellbaren Polyurethanelastomeren (Toxizität, leichte reduktive oder oxidative Spaltung der S-S–Gruppierung und zu kurze Topfzeiten) zu vermeiden und Polyurethanharnstoffelastomere zur Verfügung zu stellen, welche den Vorteil der lösungsmittelfreien Verarbeitung, längerer Topf- und kürzerer Formstandzeiten besitzen.

Es wurde nunmehr gefunden, dass sich dieses Ziel überraschenderweise mit Hilfe von Schwefel enthaltenden aromatischen Diaminen erreichen lässt, deren Aminogruppen in o,p'-Stellung zum Schwefelatom stehen und die bislang als Kettenverlängerer noch nicht bekanntgeworden sind. Es handelt sich bei diesen Verbindungen um neue interessante Aufbaukomponenten für Polyurethane, die die Herstellung insbesondere von Polyurethanelastomeren mit ausgezeichnetem mechanischem Werteniveau gestatten und die schliesslich infolge der stark unterschiedlichen Reaktivität ihrer $NH_2$–Gruppen für gezielte Umsetzungen mit NCO–Gruppen enthaltenden Verbindungen verwendet werden können. Besonders überraschend ist der Befund, dass zunächst die $NH_2$–Gruppe, die in p'-Stellung zum Schwefelatom oder zur SO–Gruppe oder zur $SO_2$–Gruppe steht, mit einer Selektivität von 95 ± 5% mit NCO-haltigen Verbindungen abreagiert, bevor die o-ständige

$NH_2$–Gruppe reagiert, während bei Verwendung von Schwefel enthaltenden Diaminen, bei denen die Aminogruppen in o,o'-Stellung, m,m'-Stellung, p,p'-Stellung oder m,p'-Stellung zum Schwefel, zur SO–Gruppe oder $SO_2$–Gruppe stehen, keine Selektivität bei der Reaktion von $NH_2$- und NCO–Gruppen beobachtet wird.

Neben diesen schwefelüberbrückten, jedoch sonst unsubstituierten aromatischen Diaminen sind erfindungsgemäss diejenigen Schwefel enthaltenden Diamine von besonderem Interesse, bei welchen die in o-Stellung gebundene Aminogruppe durch Elektronen anziehende Substituenten, z.B. Chlor oder sterisch hindernde Substituenten wie Carboxyl- oder Alkoxygruppen desaktiviert wird und/oder bei denen die in p'-Stellung gebundene $NH_2$–Gruppe durch Elektronen schiebende Substituenten wie z.B. Alkylgruppen aktiviert wird.

Gegenstand der Erfindung sind somit Polyurethanharnstoffe mit aromatischen, Schwefel enthaltenden Harnstoffgruppen, welche dadurch gekennzeichnet sind, dass die Harnstoffgruppen die Strukturformel

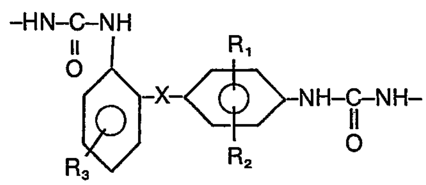

aufweisen, in welcher

X für –S–, $-\underset{\underset{O}{\|}}{S}-$ oder $-\overset{\overset{O}{\|}}{\underset{\underset{O}{\|}}{S}}-$ steht,

$R_1$ und $R_2$ gleich oder verschieden sind und Wasserstoff, einen Alkylrest, eine Alkoxy- oder eine Alkylmercaptogruppe mit 1 bis 4 C-Atomen darstellen und

$R_3$ Wasserstoff, Halogen, eine Alkoxy- oder eine Alkylmercaptogruppe mit 1 bis 4 C-Atomen, $-COR_4$, $-COOR_4$, $-\underset{\underset{O}{\|}}{C}-NR_4R_5$, $-SO_2-R_4$ oder $-SO_2-NR_4R_5$ bedeutet, wobei

$R_4$ und $R_5$ unabhängig voneinander für einen linearen oder verzweigten aliphatischen Rest mit 1 bis 4 C-Atomen stehen.

Gegenstand der Erfindung ist darüber hinaus auch ein Verfahren zur Herstellung von Polyurethanharnstoffen durch gegebenenfalls stufenweise Umsetzung von

A) Polyisocyanaten,
B) Verbindungen mit mindestens 2 gegenüber Isocyanaten reaktiven Wasserstoffatomen und einem Molekulargewicht von 400 bis 10 000,
C) aromatischen Diaminen als Kettenverlängerungsmittel, gegebenenfalls
D) weiteren gegenüber Isocyanaten reaktiven Verbindungen mit einem Molekulargewicht von 32 bis 400, gegebenenfalls in Anwesenheit von
E) Treibmitteln, Aktivatoren und weiteren an sich bekannten Zusatzstoffen,

welches dadurch gekennzeichnet ist, dass als Komponente C) Diamine der allgemeinen Formel

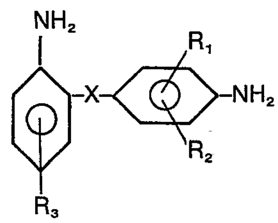

eingesetzt werden, in der X, $R_1$, $R_2$ und $R_3$ die oben angegebene Bedeutung haben.

Es wurde überraschenderweise gefunden, dass die erfindungsgemäss zu verwendenden Diamine infolge der unerwartet stark unterschiedlichen Reaktivität ihrer Aminogruppen auch ohne Zusatz von organischen Lösungsmitteln in Giesselastomersystemen und Verschäumungsprozessen eingesetzt werden können und dabei ausgezeichnete Verarbeitungsbedingungen (ausreichend lange Topfzeit bei kurzer Formstandzeit), sowohl bei der Herstellung von Elastomeren als auch beim Verschäumen, ermöglichen.

Weitere wichtige Vorteile der erfindungsgemäss zu verwendenden Kettenverlängerer sind ihre einfache Zugänglichkeit und ihr bei Raumtemperatur flüssiger Zustand bzw. ihr niedriger Schmelzpunkt, was ihre Dosierung besonders vereinfacht.

Erfindungsgemäss besonders bevorzugt sind Diamine, in welchen $R_1$, $R_2$ und $R_3$ Wasserstoff bedeuten. Bevorzugt sind auch Diamine, in denen $R_1$ und/oder $R_2$ Alkylgruppen mit 1 bis 4 C-Atomen, vorzugsweise Alkyl, bedeuten und $R_3$ Wasserstoff, Chlor, $-OCH_3$, $-OC_2H_5$, $-SCH_3$, $-SC_2H_5$ oder eine Gruppe $-SO-_2CH_3$, darstellt, wobei $R_1$ und $R_2$ in ortho-Stellung zur einen Aminogruppe stehen und $R_3$ in ortho- oder para-Stellung zur anderen Aminogruppe steht.

Erfindungsgemäss bevorzugt sind somit Polyurethane mit Harnstoffgruppen der Struktur

a) 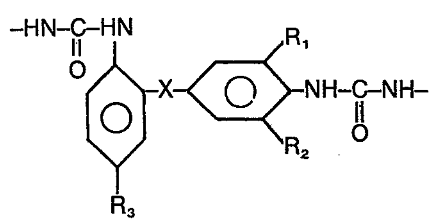

und/oder

b) 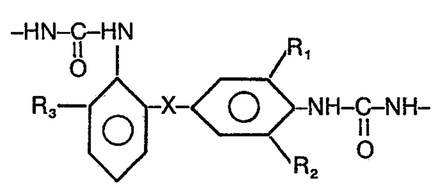

Durch Variation der Reste $R_1$, $R_2$, $R_3$ kann einerseits die Reaktivität der Aminogruppen gezielt gesteuert werden; anderseits ist es auch möglich,

die mechanischen Eigenschaften des entstehenden Polyurethans in weiten Grenzen zu beeinflussen.

So wird etwa die Reaktivität der zur Gruppe X o-ständigen Aminogruppe durch Reste $R_3$ merklich noch weiter herabgesetzt, welche Heteroatome (z.B. in Form von Ether-, Ester-, Carbonyl-, Säureamid-, Sulfonamid- oder Sulfonestergruppen) enthalten, während die Reaktivität der zu X p-ständigen Aminogruppe durch Reste $R_1$ und $R_2$ merklich noch weiter erhöht wird, wenn $R_1$ bzw. $R_2$ Alkylgruppen darstellen. Die Reaktion derartiger Amine mit NCO-Präpolymeren verläuft in zwei Stufen. Zunächst reagiert – überraschenderweise praktisch selektiv – die p′-gebundene $NH_2$–Gruppe unter merklicher Viskositätserhöhung ab. Das Gemisch bleibt jedoch gut giessbar. Die zu X o-ständige $NH_2$-Gruppe reagiert bei 70 bis 80 °C sehr langsam (lange Topfzeit) bei 100 bis 110 °C aber recht schnell (kurze Formzeit) ab.

Die folgenden drei erfindungsgemäss bevorzugten unsubstituierten Diamine werden nach literaturbekannten Verfahren hergestellt:

1) 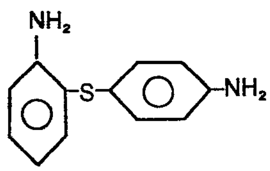

Berichte Deutsche Chem. Ges. 39, 2429
J. Chem. Soc. London 125, 1857
J. Chem. Soc. London 1930, 180
Roczniki Chem. 23, 318–35

a) Umsetzung von 4-Chlor-1-nitrobenzol und Natrium-o-aminothiophenol in Alkohol; nachfolgende Reduktion der Nitrogruppe mit Fe/HCl oder Zn/HCl oder $CH_3COOH$.

b) Umsetzung von Anilin mit Schwefel und Anilinhydrochlorid.

2) 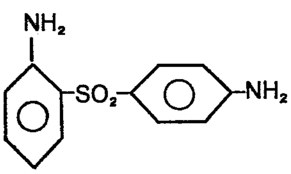

J. Am. Chem. Soc. 63, 1930

a) Umsetzung von 2-Nitrobrombenzol mit 4-Acetylaminobenzolsulfinsäure in Gegenwart von K-Acetat. Nachfolgende Abspaltung der Schutzgruppe mit Alkali.

b) Die bekannte Darstellung von 4,4′- oder 3,3′-Diaminodiphenylsulfonen aus den entsprechenden Dinitroverbindungen mittels Reduktion mit alkoholischem Schwefelammonium, Zn/HCl oder $Fe/CH_3COOH$ kann auch auf die Darstellung von 2,4′-Diaminodiphenylsulfon und substituierte Derivate übertragen werden.

Berichte Deutsche Chem. Ges. 41, 2270
Berichte Deutsche Chem. Ges. 9, 80
J. Am. Chem. Soc. 45, 2411
Berichte Deutsche Chem. Ges. 45, 2270

c) 2,4′-Diaminodiphenylsulfon kann auch, in Analogie zur bekannten Darstellung von 3,4′-Diaminodiphenylsulfon, aus 2-Amino-4′-nitro-diphenylsulfon mittels Reduktion mit Raney-Nickel und Wasserstoff hergestellt werden:

J. pharm. Soc. Japan 62, 518

3) 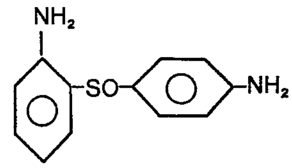

J. Chem. Soc. London 93, 1835

Darstellung in Analogie zur Darstellung von 4,4′-Diaminodiphenylsulfoxid aus 1 Mol Diaminodiphenylsulfid und 1 Mol $H_2O_2$ in Aceton bei Raumtemperatur innerhalb 24 Stunden.

In analoger Weise können auch die 1), 2) und 3) entsprechenden, an den beiden Benzolringen substituierten Verbindungen hergestellt werden.

Als Isocyanatkomponente A) kommen bei der Herstellung der erfindungsgemässen Polyurethanharnstoffe alle an sich bekannten aliphatischen, araliphatischen, aromatischen und heterocyclischen Polyisocyanate in Betracht, wie sie z.B. von W. Siefken in Justus Liebigs Annalen der Chemie, 562, Seiten 75 bis 136, beschrieben werden, beispielsweise solche der Formel

$$Q\ (NCO)_n$$

in der

n = 2 bis 4, vorzugsweise 2, und

Q einen aliphatischen Kohlenwasserstoffrest mit 2 bis 18, vorzugsweise 6 bis 10 C-Atomen,

einen cycloaliphatischen Kohlenwasserstoffrest mit 4 bis 15, vorzugsweise 5 bis 10 C-Atomen,

einen aromatischen Kohlenwasserstoffrest mit 6 bis 15, vorzugsweise 6 bis 13 C-Atomen, oder

einen araliphatischer Kohlenwasserstoffrest mit 8 bis 15, vorzugsweise 8 bis 13 C-Atomen,

bedeuten, z.B. Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4′- und/oder -4,4′-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4′- und/oder -4,4′-diisocyanat, Naphthylen-1,5-diisocyanat.

Ferner kommen beispielsweise erfindungsgemäss in Frage: Triphenylmethan-4,4′,4″-triisocyanat, Polyphenyl-polymethylen-polyisocyanate, wie sie durch Anilin-Formaldehyd-Kondensation und anschliessende Phosgenierung erhalten und z.B. in den GB-Patentschriften 874 430 und 848 671 beschrieben werden, m- und p-Isocyanatophenylsulfonyl-isocyanate gemäss der US-Patentschrift 3 454 606, perchlorierte Arylpolyisocyanate, wie sie z.B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäss US-Patentschrift 3 492 330, Allophanatgruppen aufweisende Polyisocyanate, wie sie z.B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z.B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z.B. in der BE-Patentschrift 752 261 oder in den US-Patentschriften 3 394 164 und 3 644 457 beschrieben werden, acylierte Harnstoffgruppen aufweisende Polyisocyanate gemäss der DE-Patentschrift 1 230 778, Biuretgruppen aufweisende Polyisocyanate, wie sie z.B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z.B. in der US-Patentschrift 3 654 106 beschrieben werden, Estergruppen aufweisende Polyisocyanate, wie sie z.B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäss der DE-Patentschrift 1 072 385 und polymere Fettsäureester enthaltende Polyisocyanate gemäss der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren («TDI»), Polyphenyl-polymethylen-polyisocyanate, wie sie durch Anilin-Formaldehyd-Kondensation und anschliessende Phosgenierung hergestellt werden («rohes MDI») und Carbodiimidgruppen, Urethangruppen, Allophanatgruppen, Isocyanuratgruppen, Harnstoffgruppen oder Biuretgruppen aufweisende Polyisocyanate («modifizierte Polyisocyanate»), insbesondere solche modifizierten Polyisocyanate, die sich vom 2,4- und/oder 2,6-Toluylendiisocyanat bzw. vom 4,4′- und/oder 2,4′-Diphenylmethandiisocyanat ableiten.

Selbstverständlich können erfindungsgemäss auch sogenannte NCO-Vorpolymere, also Umsetzungsprodukte der nachstehend beschriebenen höhermolekularen, gegenüber Isocyanaten reaktive Gruppen aufweisenden Verbindungen mit einem Überschuss eines oder mehrerer der genannten Polyisocyanate eingesetzt werden.

Für die Herstellung der erfindungsgemässen Polyurethanharnstoffe geeignete Komponenten B) sind Verbindungen mit mindestens zwei gegenüber Isocyanaten reaktionsfähigen Wasserstoffatomen von einem Molekulargewicht in der Regel von 400 bis 10 000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 600 bis 6000, vorzugsweise 1000 bis 4000, z.B. mindestens zwei, in der Regel 2 bis 8, vorzugsweise aber 2 bis 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind:

a) Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in

Frage. Die Polyester können anteilig endständige Carboxylgruppen aufweisen. Auch Polyester aus Lactonen, z. B. ε-Caprolacton, oder aus Hydroxycarbonsäuren, z. B. «w-Hydroxycapronsäure, sind einsetzbar.

b) Auch die erfindungsgemäss in Frage kommenden, mindestens zwei, in der Regel zwei bis acht, vorzugsweise zwei bis drei, Hydroxylgruppen aufweisenden Polyäther sind solche der an sich bekannten Art und werden z. B. durch Polymerisation von Epoxiden wie Äthylenoxid, Propylenoxid, Butylenoxid, Tetrahydrofuran, Styroloxid oder Epichlorhydrin mit sich selbst, z. B. in Gegenwart von Lewis-Katalysatoren wie $BF_3$, oder durch Anlagerung dieser Epoxide, vorzugsweise von Äthylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z. B. Äthylenglykol, Propylenglykol-(1,3) oder -(1,2), Trimethylolpropan, Glycerin, Sorbit, 4,4'-Dihydroxy-diphenylpropan, Anilin, Äthanolamin oder Äthylendiamin hergestellt. Auch Sucrosepolyäther, wie sie z. B. in den DE-Auslegeschriften 1 176 358 und 1 064 938 beschrieben werden, sowie auf Formit oder Formose gestartete Polyäther (wie in DE-Offenlegungsschriften 2 639 083 bzw. 2 737 951), kommen erfindungsgemäss in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch OH-Gruppen aufweisende Polybutadiene sind erfindungsgemäss geeignet.

c) Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z. B. um Polythiomischäther, Polythioätherester oder Polythioätheresteramide.

d) Als Polyacetale kommen z. B. die aus Glykolen, wie Diäthylenglykol, Triäthylenglykol, 4,4'-Dioxäthoxy-diphenyldimethylmethan, Hexandiol und Formaldehyd herstellbaren Verbindungen in Frage. Auch durch Polymerisation cyclischer Acetale wie z. B. Trioxan (DE-Offenlegungsschrift 1 694 128) lassen sich erfindungsgemäss geeignete Polyacetale herstellen.

e) Als Hydroxylgruppen aufweisende Polycarbonate kommen solche der an sich bekannten Art in Betracht, die z. B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z. B. Diphenylcarbonat, oder Phosgen hergestellt werden können (DE-Auslegeschriften 1 694 080, 1 915 908 und 2 221 751; DE-Offenlegungsschrift 2 605 024).

f) Zu den Polyesteramiden und Polyamiden zählen z. B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

g) Auch bereits Urethan- oder Harnstoffgruppen enthaltende Polyhydroxylverbindungen sowie gegebenenfalls modifizierte natürliche Polyole, wie Rizinusöl oder Kohlenhydrate, z. B. Stärke, sind verwendbar. Auch Anlagerungsprodukte von Alkylenoxiden an Phenol-Formaldehyd-Harze oder auch an Harnstoff-Formaldehyd-Harze sind erfindungsgemäss einsetzbar.

h) Die genannten Polyhydroxylverbindungen können vor ihrer Verwendung im Polyisocyanat-Polyadditionsverfahren noch in der verschiedensten Weise modifiziert werden: So lässt sich gemäss DE-Offenlegungsschriften 2 210 839 (US-Patentschrift 3 849 515) und 2 544 195 ein Gemisch aus verschiedenen Polyhydroxylverbindungen (z. B. aus einem Polyäther- und einem Polyesterpolyol) durch Verätherung in Gegenwart einer starken Säure zu einem höhermolekularen Polyol kondensieren, welches aus über Ätherbrücken verbundenen verschiedenen Segmenten aufgebaut ist. Es ist auch möglich, z. B. gemäss DE-Offenlegungsschrift 2 559 372 in die Polyhydroxylverbindungen Amidgruppen oder gemäss DE-Offenlegungsschrift 2 620 487 durch Umsetzung mit polyfunktionellen Cyansäureestern Triazingruppen einzuführen. Durch Umsetzung eines Polyols mit einer weniger als äquivalenten Menge eines Diisocyanatocarbodiimids und anschliessende Reaktion der Carbodiimidgruppe mit einem Amin, Amid, Phosphit oder einer Carbonsäure erhält man Guanidin-, Phosphonoformamidin- bzw. Acylharnstoffgruppen aufweisende Polyhydroxylverbindungen (DE-Offenlegungsschriften 2 714 289, 2 714 292 und 2 714 293). Von besonderem Interesse ist es in manchen Fällen, die höhermolekularen Polyhydroxylverbindungen durch Reaktion mit Isatosäureanhydrid vollständig oder teilweise in die entsprechenden Anthranilsäureester überzuführen, wie es in den DE-Offenlegungsschriften 2 019 432 und 2 619 840 bzw. den US-Patentschriften 3 808 250, 3 975 428 und 4 016 143 beschrieben ist. Man erhält auf diese Weise höhermolekulare Verbindungen mit endständigen aromatischen Aminogruppen.

Durch Umsetzung von NCO-Präpolymeren mit Hydroxylgruppen aufweisenden Enaminen, Aldiminen oder Ketiminen und anschliessende Hydrolyse erhält man gemäss DE-Offenlegungsschrift 2 546 536 bzw. US-Patentschrift 3 865 791 höhermolekulare, endständige Aminogruppen aufweisende Verbindungen. Weitere Herstellungsverfahren für höhermolekulare Verbindungen mit endständigen Aminogruppen oder Hydrazidgruppen werden in der DE-Offenlegungsschrift 1 694 152 (US-Patentschrift 3 625 871) beschrieben.

i) Erfindungsgemäss können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z. B. erhalten, wenn man Polyadditionsreaktionen (z. B.

Umsetzungen zwischer Polyisocyanaten und aminofunktionellen Verbindungen) bzw. Polykondensationsreaktionen (z.B. zwischen Formaldehyd und Phenolen und/oder Aminen) in situ in den oben genannten, Hydroxylgruppen aufweisenden Verbindungen ablaufen lässt. Derartige Verfahren sind beispielsweise in den DE-Auslegeschriften 1 168 075 und 1 260 142, sowie den DE-Offenlegungsschriften 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäss US-Patentschrift 3 869 413 bzw. DE-Offenlegungsschrift 2 550 860 eine fertige wässrige Polymerdispersion mit einer Polyhydroxylverbindung zu vermischen und anschliessend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyäthern (US-Patentschriften 3 383 351, 3 304 273, 3 523 093, 3 110 695; DE-Auslegeschrift 1 152 536) oder Polycarbonatpolyolen (DE-Patentschrift 1 769 795; US-Patentschrift 3 637 909) erhalten werden, sind für das erfindungsgemässe Verfahren geeignet. Bei Verwendung von Polyätherpolyolen, welche gemäss den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)-acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebenenfalls weiterer olefinisch ungesättigter Monomerer Carboxylgruppen eingeführt wurden (DE-Offenlegungsschriften 2 714 291, 2 739 620 und 2 654 746) können mit besonderem Vorteil in Kombination mit mineralischen Füllstoffen eingesetzt werden.

Bei der Verwendung von modifizierten Polyhydroxylverbindungen der obengenannten Art als Ausgangskomporente im Polyisocyanat-Polyadditionsverfahren entstehen in vielen Fällen Polyurethankunststoffe mit wesentlich verbesserten mechanischen Eigenschaften.

Vertreter der genannten erfindungsgemäss zu verwendenden Verbindungen sind z.B. in High Polymers, Vol. XVI, «Polyurethanes, Chemistry and Technology», verfasst von Saunders-Frisch, Interscience Publishers, New York, London, Band I, 1962, Seiten 32–42 und Seiten 44–54 und Band II, 1964, Seiten 5–6 und 198–199, sowie im Kunststoff-Handbuch, Band VII, Vieweg-Höchtlen, Carl-Hanser-Verlag, München, 1966, z.B. auf den Seiten 45–71, beschrieben. Selbstverständlich können Mischungen der obengenannten Verbindungen mit mindestens zwei gegenüber Isocyanaten reaktionsfähigen Wasserstoffatomen mit einem Molekulargewicht von 400 bis 10 000, z.B. Mischungen von Polyäthern und Polyestern, eingesetzt werden.

Von besonderem Vorteil ist es dabei in manchen Fällen, niedrigschmelzende und hochschmelzende Polyhydroxylverbindungen miteinander zu kombinieren (DE-Offenlegungsschrift 2 706 297).

Im erfindungsgemässen Verfahren können gegebenenfalls neben den erfindungswesentlichen Diaminen C auch weitere Kettenverlängerungsmittel (in einer Menge bis zu 70 Mol-%, vorzugsweise weniger als 50 Mol-%, bezogen auf die Summe der Kettenverlängerungsmittel C und D) eingesetzt werden. Es sind dies Verbindungen mit mindestens zwei gegenüber Isocyanaten reaktionsfähigen Wasserstoffatomen und einem Molekulargewicht von 32 bis 400. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien genannt:
Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glyzerin, Trimethylolpropan, Hexantriol-(1,2,6), Trimethyloläthan, Pentaerythrit, Chinit, Mannit und Sorbit, Ricinusöl, Diäthylenglykol, Triäthylenglykol, Tetraäthylenglykol, höhere Polyäthylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4′-Dihydroxydiphenylpropan, Di-hydroxymethyl-hydrochinon, Äthanolamin, Diäthanolamin, N-Methyldiäthanolamin, Triäthanolamin und 3-Aminopropanol.

Als niedermolekulare Polyole kommen erfindungsgemäss auch die Gemische von Hydroxyaldehyden und Hydroxyketonen («Formose») bzw. die hieraus durch Reduktion erhaltenen mehrwertigen Alkohole («Formit») in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildnern und/oder Phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen

und/oder von Polyhydrazodicarbonamiden, in niedermolekularen, mehrwertigen Alkoholen kommen erfindungsgemäss als Polyolkomponente in Betracht (DE-Offenlegungsschrift 2 638 759).

Erfindungsgemäss geeignete aliphatische Diamine sind beispielsweise Äthylendiamin, 1,4-Tetramethylendiamin, 1,11-Undecamethylendiamin, 1,12-Dodecamethylendiamin sowie deren Gemische, 1-Amino-3,3,5-Trimethyl-5-aminomethylcyclohexan («Isophorondiamin»), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-Offenlegungsschrift 2 638 731) und cycloaliphatische Triamine gemäss DE-Offenlegungsschrift 2 614 244. Auch Hydrazin und substituierte Hydrazine, z.B. Methylhydrazin, N,N'-Dimethylhydrazin und deren Homologe sowie Säuredihydrazide kommen erfindungsgemäss in Betracht, z.B. Carbodihydrazid, Oxalsäuredihydrazid, die Dihydrazide von Malonsäure, Bernsteinsäure, Glutarsäure, Adipinsäure, β-Methyladipinsäure, Sebazinsäure, Hydracrylsäure und Terephthalsäure; Semicarbazido-alkylen-hydrazide, wie z.B. β-Semicarbazido-propionsäurehydrazid (DE-Offenlegungsschrift 1 770 591), Semicarbazido-alkylencarbazinester, wie z.B. 2-Semicarbazidoäthyl-carbazinester (DE-Offenlegungsschrift 1 918 504) oder auch Amino-semicarbazid-Verbindungen, wie z.B. β-Aminoäthylsemicarbazido-carbonat (DE-Offenlegungsschrift 1 902 931). Zur Steuerung ihrer Reaktivität können die Aminogruppen ganz oder teilweise durch Aldimin- bzw. Ketimin-Gruppen blockiert sein (US-Patentschrift 3 734 894; DE-Offenlegungsschrift 2 637 115).

Als Beispiele für aromatische Diamine seien Bisanthranilsäureester gemäss den DE-Offenlegungsschriften 2 040 644 und 2 160 590, 3,5- und 2,4-Diaminobenzoesäureester gemäss DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Äthergruppen aufweisenden Diamine gemäss DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-Dichlor-4,4'-diamino-diphenylmethan, Toluylendiamin, 4,4'-Diaminodiphenylmethan, 4,4'-Diaminodiphenyldisulfide (DE-Offenlegungsschrift 2 404 976), Diaminodiphenyldithioether (DE-Offenlegungsschrift 2 509 404), durch Alkylthiogruppen substituierte aromatische Diamine (DE-Offenlegungsschrift 2 638 760), Diaminobenzolphosphonsäureester (DE-Offenlegungsschrift 2 459 491), Sulfonat- oder Carboxylatgruppen enthaltende aromatische Diamine (DE-Offenlegungsschrift 2 720 166) sowie die in der DE-Offenlegungsschrift 2 635 400 aufgeführten hochschmelzenden Diamine genannt. Beispiele für aliphatisch-aromatische Diamine sind die Aminoalkylthioaniline gemäss DE-Offenlegungsschrift 2 734 574.

Als Kettenverlängerungsmittel können erfindungsgemäss auch Verbindungen wie 1-Mercapto-3-aminopropan, gegebenenfalls substituierte Aminosäuren, z.B. Glycin, Alanin, Valin, Serin und Lysin sowie gegebenenfalls substituierte Dicarbonsäuren, beispielsweise Bernsteinsäure, Adipinsäure, Phthalsäure, 4-Hydroxyphthalsäure und 4-Aminophthalsäure verwendet werden.

Ferner können gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden. Derartige monofunktionelle Verbindungen sind z.B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Äthylhexanol, Octanol, Dodecanol, die verschiedenen Amylalkohole, Cyclohexanol, Äthylenglykolmonoäthyläther.

Weitere erfindungsgemäss geeignete niedermolekulare Polyole vom Molekulargewicht bis 400 sind Esterdiole der allgemeinen Formeln

$$HO-(CH_2)_x-CO-O-(CH_2)_y-OH \quad \text{und}$$
$$HO-(CH_2)_x-O-CO-R-CO-O-(CH_2)_x-OH$$

in denen

R einen Alkylenrest mit 1 bis 10, vorzugsweise 2 bis 6 C-Atomen bzw. einen Cycloalkylen- oder Arylenrest mit 6 bis 10 C-Atomen

x = 2 bis 6 und

y = 3 bis 5

bedeuten, z.B. δ-Hydroxybutyl-ε-hydroxy-capronsäureester, ω-Hydroxyhexyl-γ-hydroxybuttersäureester, Adipinsäure-bis-(β-hydroxyäthyl)-ester und Terephthalsäure-bis-(β-hydroxyäthyl)-ester; Diolurethane der allgemeinen Formel

$$HO-(CH_2)_x-O-CO-NH-R'-NH-CO-O-(CH_2)_x-OH$$

in der

R' einen Alkylenrest mit 2 bis 15, vorzugsweise 2 bis 6 C-Atomen oder einen Cycloalkylen- oder Arylenrest mit 6 bis 15 C-Atomen und

x eine Zahl zwischen 2 und 6

darstellen, z.B. 1,6-Hexamethylen-bis-(β-hydroxyäthylurethan) oder 4,4'-Diphenylmethan-bis-(δ-hydroxybutylurethan);

sowie Diolharnstoffe der allgemeinen Formel

$$HO-(CH_2)_x-\underset{\substack{| \\ R'''}}{N}-CO-NH-R''-NH-CO-\underset{\substack{| \\ R'''}}{N}-(CH_2)_x-OH$$

in der

R'' einen Alkylenrest mit 2 bis 15, vorzugsweise 2 bis 9 C-Atomen oder einen Cycloalkylen- oder Arylenrest mit 6 bis 15 C-Atomen,

R''' Wasserstoff oder eine Methylgruppe und

x die Zahlen 2 oder 3

bedeuten, z.B. 4,4'-Diphenylmethan-bis-(β-hydroxyäthylharnstoff) oder die Verbindung

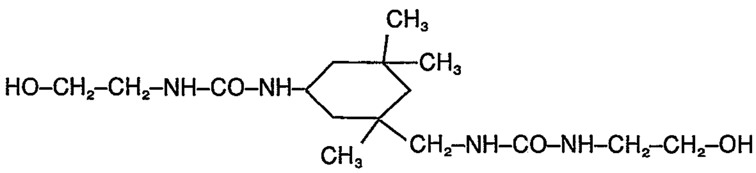

Für manche Fälle ist es vorteilhaft, Polyole einzusetzen, welche Sulfonat- und/oder Phosphonatgruppen enthalten (DE-Offenlegungsschrift 2 719 372), vorzugsweise das Addukt von Bisulfit an Butendiol-1,4 bzw. dessen Alkoxylierungsprodukte.

Gegebenenfalls können bei der Herstellung der erfindungsgemässen Polyurethanharnstoffe an sich bekannte Hilfs- und Zusatzstoffe mitverwendet werden. Es sind dies z.B.

a) Wasser und/oder leicht flüchtige anorganische oder organische Substanzen als Treibmittel. Als organische Treibmittel kommen z.B. Aceton, Äthylacetat, halogensubstituierte Alkane wie Methylenchlorid, Chloroform, Äthylidenchlorid, Vinylidenchlorid, Monofluortrichlormethan, Chlordifluormethan, Dichlordifluormethan, ferner Butan, Hexan, Heptan oder Diäthyläther, als anorganische Treibmittel z.B. Luft, $CO_2$ oder $N_2O$, in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München, 1966, z.B. auf den Seiten 108 und 109, 453 bis 455 und 507 bis 510 beschrieben.

b) Katalysatoren der an sich bekannten Art, z.B. tertiäre Amine, wie Triäthylamin, Tributylamin, N-Methyl-morpholin, N-Äthyl-morpholin, N,N,N′,N′-Tetramethyl-äthylendiamin, Pentamethyl-diäthylentriamin und höhere Homologe (DE-Offenlegungsschriften 2 624 527 und 2 624 528), 1,4-Diazabicyclo-(2,2,2)-octan, N-Methyl-N′-dimethylaminoäthyl-piperazin, Bis-(dimethylaminoalkyl)-piperazine (DE-Offenlegungsschrift 2 636 787), N,N-Dimethylbenzylamin, N,N-Dimethylcyclohexylamin, N,N-Diäthylbenzylamin, Bis-(N,N-diäthylaminoäthyl)-adipat, N,N,N′,N′-Tetramethyl-1,3-butandiamin, N,N-Dimethyl-β-phenyl-äthylamin, 1,2-Dimethylimidazol, 2-Methylimidazol, monocyclische und bycyclische Amidine (DE-Offenlegungsschrift 1 720 633), Bis-(dialkylamino)-alkyl-äther (US-Patentschrift 3 330 782, DE-Auslegeschrift 1 030 558, DE-Offenlegungsschriften 1 804 361 und 2 618 280) sowie Amidgruppen (vorzugsweise Formamidgruppen) aufweisende tertiäre Amine gemäss den DE-Offenlegungsschriften 2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methyl-äthylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z.B. Triäthanolamin, Triisopropanolamin, N-Methyl-diäthanolamin, N-Äthyl-diäthanolamin, N,N-Dimethyl-äthanolamin, deren Umsetzungsprodukte mit Alkylenoxiden wie Propylenoxid und/oder Äthylenoxid sowie sekundär-tertiäre Amine gemäss DE-Offenlegungsschrift 2 732 292.

Als Katalysatoren kommen ferner Silaamine mit Kohlenstoff-Silizium-Bindungen, wie sie z.B. in der DE-Patentschrift 1 229 290 (entsprechend der US-Patentschrift 3 620 984) beschrieben sind, in Frage, z.B. 2,2,4-Trimethyl-2-silamorpholin und 1,3-Diäthylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1 769 043).

Die Reaktion zwischen NCO-Gruppen und Zerewitinoffaktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2 062 288, 2 062 289, 2 117 576 (US-Patentschrift 3 758 444), 2 129 198, 2 330 175 und 2 330 211 beschrieben.

Erfindungsgemäss können auch organische Metallverbindungen, insbesondere organische Zinnverbindungen, als Katalysatoren, verwendet werden. Als organische Zinnverbindungen kommen neben schwefelhaltigen Verbindungen wie Di-n-octyl-zinn-mercaptid (DE-Auslegeschrift 1 769 367; US-Patentschrift 3 645 927) vorzugsweise Zinn(II)-salze von Carbonsäuren wie Zinn(II)-acetat, Zinn(II)-octoat, Zinn(II)-äthylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäss zu verwendenden Katalysatoren sowie Einzelheiten über die Wirkungsweise der Katalysatoren sind im

Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen 0,001 und 10 Gew.-%, bezogen auf die Gesamtmenge an Verbindungen mit mindestens zwei gegenüber Isocyanaten reaktionsfähigen Wasserstoffatomen, eingesetzt.

c) Oberflächenaktive Zusatzstoffe, wie Emulgatoren und Schaumstabilisatoren. Als Emulgatoren kommen z.B. die Natriumsalze von Ricinusölsulfonaten oder Salze von Fettsäuren mit Aminen wie ölsaures Diäthylamin oder stearinsaures Diäthanolamin in Frage. Auch Alkali- oder Ammoniumsalze von Sulfonsäuren wie etwa von Dodecylbenzolsulfonsäure oder Dinaphtylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyäthersiloxane, speziell wasserlösliche Vertreter, in Frage. Diese Verbindungen sind im allgemeinen so aufgebaut, dass ein Copolymerisat aus Äthylenoxid und Propylenoxid mit einem Polydimethylsiloxanrest verbunden ist. Derartige Schaumstabilisatoren sind z.B. in den US-Patentschriften 2 834 748, 2 917 480 und 3 629 308 beschrieben. Von besonderem Interesse sind vielfach über Allophanatgruppen verzweigte Polysiloxan-Polyoxyalkylen-Copolymere gemäss DE-Offenlegungsschrift 2 558 523.

d) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chloräthylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Russ oder Schlämmkreide.

Weitere Beispiele von gegebenenfalls erfindungsgemäss mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Durchführung des erfindungsgemässen Verfahrens:

Die Reaktionskomponenten werden erfindungsgemäss nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäss in Frage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Erfindungsgemäss bevorzugt ist das Präpolymerverfahren. Man setzt dabei ein Äquivalent der höhermolekularen Verbindung mit mindestens 2 gegenüber Isocyanaten reaktiven Wasserstoffatomen (Komponente B) mit etwa 1,5 bis 5 Äquivalenten, vorzugsweise 2 bis 3 Äquivalenten, des Polyisocyanats (Komponente A) um, so dass ein Präpolymer mit einem NCO-Gehalt von vorzugsweise 2 bis 7, besonders bevorzugt 3 bis 5 Gew.-%, entsteht. 0,8 bis 1,8 Äquivalente, vorzugsweise 1 bis 1,2 Äquivalente, dieses NCO-Präpolymeren werden dann gemäss einer der folgenden Varianten umgesetzt:

a) mit 1 Äquivalent eines erfindungsgemäss zu verwendenden, Schwefel enthaltenden aromatischen Diamins oder

b) ein Äquivalent eines Gemisches aus einem erfindungsgemäss einzusetzenden schwefelhaltigen aromatischen Diamins und einem konventionellen Diamin-Kettenverlängerungsmittel (vorzugsweise im Molverhältnis 3:7 bis 7:3) oder

c) mit 1 Äquivalent eines Kettenverlängerergemisches, bestehend aus einem erfindungsgemäss zu verwendenden Diamin und einem konventionellen Polyolvernetzer (Molekulargewicht 62 bis 400, vorzugsweise 90 bis 200), vorzugsweise im Molverhältnis 2:8 bis 8:2, besonders bevorzugt 4:6 bis 6:4, oder

d) mit 1,2 bis 6, vorzugsweise 2 bis 4 Äquivalenten eines erfindungsgemäss zu verwendenden Diamins bzw. eines Gemisches eines solchen Diamins mit konventionellen Kettenverlängerungsmitteln, wobei ein endständige Amingruppe aufweisendes Präpolymer entsteht, welches danach im Äquivalentverhältnis von etwa 0,7:1 bis 1,3:1, vorzugsweise 1:1 bis 1,2:1, mit einem der obengenannten Diisocyanate vernetzt werden kann.

Bei der Schaumstoffherstellung kann erfindungsgemäss die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, in Frage. In der Form schäumt das schäumfähige Reaktionsgemisch auf und bildet den Formkörper. Die Formverschäumung kann dabei so durchgeführt werden, dass das Formteil an seiner Oberfläche Zellstruktur aufweist, sie kann aber auch so durchgeführt werden, dass das Formteil eine kompakte Haut und einen zelligen Kern aufweist. Erfindungsgemäss kann man in diesem Zusammenhang so vorgehen, dass man in die Form so viel schäumfähiges Reaktionsgemisch einträgt, dass der gebildete Schaumstoff die Form gerade ausfüllt. Man kann aber auch so arbeiten, dass man mehr schäumfähiges Reaktionsgemisch in die

Form einträgt, als zur Ausfüllung des Forminneren mit Schaumstoff notwendig ist. Im letztgenannten Fall wird somit unter «overcharging» gearbeitet; eine derartige Verfahrensweise ist z.B. aus den US-Patentschriften 3 178 490 und 3 182 104 bekannt.

Bei der Formverschäumung werden vielfach an sich bekannte «äussere Trennmittel», wie Siliconöle, mitverwendet. Man kann aber auch sogenannte «innere Trennmittel», gegebenenfalls im Gemisch mit äusseren Trennmitteln, verwenden, wie sie z.B. aus den DE-Offenlegungsschriften 2 121 670 und 2 307 589 bekanntgeworden sind.

Erfindungsgemäss lassen sich auch kalthärtende Schaumstoffe herstellen (vgl. GB-Patentschrift 1 162 517, DE-Offenlegungsschrift 2 153 086).

Selbstverständlich können aber auch Schaumstoffe durch Blockverschäumung oder nach dem an sich bekannten Doppeltransportbandverfahren hergestellt werden.

Die nach der Erfindung erhältlichen Produkte finden z.B. folgende Anwendung: Schuhsohlen, Druckwalzen, Stossdämpfer, Schäume für Polstermaterialien usw.

Die nachfolgenden Beispiele dienen zur Erläuterung der vorliegenden Erfindung. Wenn nicht anders vermerkt, sind Mengenangaben als Gewichtsteile bzw. Gewichtsprozente zu verstehen. Zunächst seien allgemeine Arbeitsvorschriften für die Herstellung der erfindungsgemäss einzusetzenden Diamine angegeben.

1. 2,4'-Diamino-diphenylsulfide

a) 1 Mol des Na-Salzes von o-Aminothiophenol wird in 200 ml Methanol gelöst und bei 80 °C eine Lösung von 1 Mol eines gegebenenfalls substituierten Nitrochlorbenzols in 300 ml Methanol (Lösung, falls erforderlich, erwärmen) zugetropft. Man rührt 4 Stunden unter Rückfluss nach, kühlt ab und impft an, wenn der Ansatz nicht von selbst kristallisiert. Es wird abgesaugt, mit Wasser gewaschen und getrocknet. Die Produkte besitzen bereits einen für die Weiterverarbeitung bestens geeigneten Reinheitsgrad.

1 Mol der Nitroverbindung wird in 1,3 l Methanol eingetragen, ca. 40 g Raney-Nickel hinzugefügt, mit 40 bar $H_2$ auf 50 °C aufgeheizt und bei 50 °C mit 30 bis 50 bar $H_2$ bis zum Ende der $H_2$-Aufnahme hydriert. Man entspannt, filtriert vom Katalysator ab und dampft das Lösungsmittel ab. Die rohen Amine fallen in nahezu quantitativer Ausbeute an. Sie können aus Toluol/Waschbenzin (1:1) umkristallisiert werden. Schmelzpunkt von 2,4'-Diamino-diphenylsulfid: 59 °C.

b) 1 Mol des Na-Salzes von p-Aminothiophenol wird in 200 ml Methanol gelöst und bei 80 °C eine Lösung von 1 Mol eines gegebenenfalls substituierten o-Nitrochlorbenzols in 300 ml Methanol, gegebenenfalls unter Erwärmung, zugetropft. Man rührt 4 Stunden unter Rückfluss nach, kühlt ab und verdünnt mit Eiswasser. Es wird abgesaugt, mit Wasser gewaschen und getrocknet. Hydrierung zum Diamin und Aufarbeitung wie unter a).

c) 1 Mol des Na-Salzes von p-Nitro-thiophenol bzw. o-Nitrothiophenol wird in 250 ml Methanol gelöst und unter Stickstoff bei 80 °C eine Lösung von 1 Mol eines gegebenenfalls substituierten o-bzw. p-Nitrochlorbenzols in 360 ml Methanol zugetropft. (Lösung, falls erforderlich, erwärmen.) Man rührt 4 Stunden unter Rückfluss nach, kühlt ab und verdünnt mit Eiswasser. Es wird abgesaugt, mit Wasser gewaschen und getrocknet. Hydrierung zum Diamin und Aufarbeitung wie unter a).

2. 2,4'-Diaminodiphenylsulfone

a) 1 Mol des entsprechenden 2,4'-Diaminodiphenylsulfids wird mit 2 Mol Acetylchlorid in Gegenwart von Pyridin ins Bisacetanilid übergeführt. Das Bisacetanilid wird in Aceton (besser in 600 ml Eisessig) vorgelegt und die Mischung auf 80 °C erhitzt. Man tropft 200 g (2 Mol) 35%ige $H_2O_2$-Lösung hinzu, wobei der Ansatz infolge der exothermen Reaktion unter Rückfluss kocht. Man rührt 2 Stunden bei 100 °C nach, lässt abkühlen und versetzt mit 80 g NaOH zur Zersetzung von überschüssigem $H_2O_2$. Man kocht eine weitere Stunde unter Rückfluss, kühlt auf 0 bis 10 °C und saugt das kristalline Produkt ab. Danach wäscht man mit $H_2O$ alkalifrei und trocknet. Schmelzpunkt von 2,4-Diaminodiphenylsulfon: 116 bis 117 °C.

b) 1 Mol Bisacetanilid werden in 1 l $CCl_4$ gelöst und eine Lösung von 430 g Na-Acetat (wasserfrei) in 1,25 l $H_2O$ hinzugefügt. Unter kräftigem Rühren leitet man bei 0 bis 10 °C 183 g Chlor in die Mischung und rührt weitere 12 Stunden bei Raumtemperatur nach. Anschliessend wird die organische Phase abgetrennt, mit Wasser gewaschen, bis KJ-Papier nicht mehr gebläut wird (gegebenenfalls mit Bisulfit-Lösung reduzieren) und im Vakuum eingedampft. Den flüssigen Rückstand versetzt man mit 200 ml Ether und lässt unter Kühlung bei 0 °C auskristallisieren.

1 Mol der Bisacetylverbindung wird in eine Lösung von 2,5 Mol NaOH in 1 l Wasser eingetragen, die Mischung 5 Stunden unter Rückfluss gekocht, auf 0 bis 10 °C abgekühlt und die Kristalle abgesaugt und getrocknet.

3. 2,4'-Diaminodiphenylsulfoxide

a) 1 Mol des 2,4'-Diaminodiphenylsulfids wird in 500 ml Aceton gelöst und bei Raumtemperatur mit 1 Mol $H_2O_2$ (35%ige Lösung) umgesetzt. Das Reaktionsgemisch wird 24 Stunden bei Raumtemperatur stehengelassen und danach das Aceton im Vakuum entfernt. Das kristallisierte Produkt wird aus Alkohol umkristallisiert und getrocknet. Schmelzpunkt von 2,4'-Diaminodiphenylsulfoxid: 109 bis 111 °C.

b) 1 Mol des bis-acetylierten 2,4'-Diaminodiphenylsulfids wird in 500 ml Eisessig gelöst und mit 1 Mol $H_2O_2$ (35%ige Lösung) bei Raumtemperatur versetzt. Das Reaktionsgemisch wird mehrere Stunden bei 25 bis 30 °C gerührt, vom Eisessig abgetrennt und getrocknet.

1 Mol des getrockneten bis-acetylierten 2,4'-Diaminodiphenylsulfoxids wird 2 Stunden mit 85 g NaOH in 1 l $H_2O$ am Rückfluss gekocht, das Gemisch auf 10 °C abgekühlt, die ausgefallenen Kristalle abgesaugt und getrocknet.

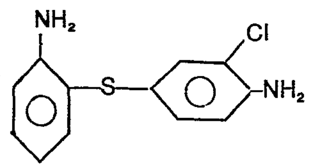

Schmelzpunkt: 106 bis 107 °C.

Die in den Beispielen verwendeten NCO-Präpolymere wurden nach folgenden Rezepturen hergestellt:

Präpolymer I

| | |
|---|---|
| 45 Gew.-% | eines linearen Polypropylenoxids (Molekulargewicht: 2000, OH-Zahl 56) |
| 5 Gew.-% | eines trifunktionellen Polypropylenoxids (Molekulargewicht: 4800, OH-Zahl 35) |
| 50 Gew.-% | eines linearen Polypropylenoxids (Molekulargewicht: 1000, OH-Zahl 112) |
| 37,02 Gew.-% | eines flüssigen technischen Diisocyanatodiphenylmethans (NCO-Gehalt = 33,3%) |

Das Präpolymere hat einen NCO-Gehalt von 4,45%.

Präpolymer II

| | |
|---|---|
| 50 Gew.-% | eines Polyesterdiols aus Adipinsäure, Hexandiol-1,6 und Neopentylglykol (Molekulargewicht: 2000; OH-Zahl 56) |
| 50 Gew.-% | eines linearen Polypropylenoxids (Molekulargewicht 1000; OH-Zahl 112) |
| 37,5 Gew.-% | eines flüssigen technischen Diisocyanatodiphenylmethans (NCO-Gehalt 33,3%). |

Das Präpolymere hat einen NCO-Gehalt von 4,45%.

Beispiel 1 (Vergleichsversuch)

100 Teile des NCO-Präpolymeren I werden bei 60 °C mit 13,39 Teilen geschmolzenem 3,5-Diamino-4-methyl-benzoesäure-2-ethylhexylester vermischt ($NCO:NH_2$ = 1,1:1). Das Gemisch reagiert so schnell, dass es nicht in eine Form gefüllt werden kann.

Beispiel 2 (Vergleichsversuch)

100 Teile Präpolymer I werden bei 60 °C mit 13,37 Teilen geschmolzenem 4,4′-Diamino-3,3′-dimethylthio-diphenylmethan vermischt ($NCO:NH_2$ = 1,1:1). Das reagierende Gemisch bleibt 2 Minuten giessbar, wird in eine vorgelegte Form gegossen und kann nach 2 Minuten bei 110 °C entformt werden. Nach einer Temperzeit von 24 Stunden bei 110 °C wird ein Elastomeres mit folgenden mechanischen Werten erhalten:

| | |
|---|---|
| Zugfestigkeit | (DIN 53 504) 23,4 MPa |
| Bruchdehnung | (DIN 53 504) 850% |
| Weiterreisswiderstand | (DIN 53 515) 31 KN/m |
| Shore-Härte A | (DIN 53 505) 88 |
| Elastizität | (DIN 53 512) 45% |

Das Elastomer ist für viele Anwendungszwecke zu hart.

Beispiel 3 (Vergleichsversuch gemäss DE-OS 2 731 815)

100 Teile Präpolymer I werden bei 60 °C mit 12,23 Teilen 4,4′-Diamino-3,3′-5,5′-tetramethyldiphenylmethan vermischt ($NCO:NH_2$ = 1,1:1). Das Gemisch reagiert so schnell, dass es nicht in eine Form gebracht werden kann.

Beispiel 4

100 Teile Präpolymer I werden bei 60 °C mit 10,4 Teilen geschmolzenem 2,4′-Diamino-diphenylsulfid vermischt ($NCO:NH_2$ = 1,1:1). Das reagierende Gemisch bleibt 3 Minuten giessbar, wird in eine vorgeheizte Form gegossen und kann nach 8 Minuten bei 110 °C entformt werden. Die folgenden mechanischen Werte werden nach 24stündiger Temperzeit bei 110 °C gemessen:

| | |
|---|---|
| Zugfestigkeit | (DIN 53 504) 22,2 MPa |
| Bruchdehnung | (DIN 53 504) 890% |
| Weiterreisswiderstand | (DIN 53 515) 31,4 KN/m |
| Shore-Härte A | (DIN 53 505) 72 |
| Elastizität | (DIN 53 512) 43% |

Beispiel 5

100 Teile Präpolymer I werden bei 60 °C mit 13,29 Teilen 2,4′-Diamino-3′-ethylthio-diphenylsulfid vermischt ($NCO:NH_2$ = 1,1:1). Das reagierende Gemisch bleibt 2,5 Minuten giessbar, wird in eine vorgeheizte Form gegossen und kann nach 7 Minuten bei 110 °C entformt werden. Nach 24stündiger Temperzeit bei 110 °C hat das Elastomer folgende mechanische Eigenschaften:

| | |
|---|---|
| Zugfestigkeit | (DIN 53 504) 22,1 MPa |
| Bruchdehnung | (DIN 53 504) 835% |
| Weiterreisswiderstand | (DIN 53 515) 29,2 KN/m |
| Shore-Härte A | (DIN 53 505) 76 |
| Elastizität | (DIN 53 512) 40% |

Beispiel 6

100 Teile des Präpolymers I werden bei 70 °C mit 11,94 Teilen 2,4′-Diamino-diphenylsulfon vermischt ($NCO:NH_2$ = 1,1:1). Das reagierende Gemisch bleibt 2 Minuten giessbar, wird in eine vorgeheizte Form gegossen und kann nach 8 Minuten bei 110 °C entformt werden. Nach 24stündiger Temperzeit bei 110 °C hat das Elastomer folgende mechanische Eigenschaften:

| | |
|---|---|
| Zugfestigkeit | (DIN 53 504) 21,8 MPa |
| Bruchdehnung | (DIN 53 504) 987% |
| Weiterreisswiderstand | (DIN 53 515) 27,2 KN/m |
| Shore-Härte A | (DIN 53 505) 79 |
| Elastizität | (DIN 53 512) 35% |

Beispiel 7 (Vergleichsversuch)

Jeweils 100 Teile Präpolymer II werden bei 70 °C mit a) dem Diamin aus Beispiel 1 oder b) dem Diamin aus Beispiel 3 vermischt. Die Gemische reagieren so schnell, dass sie nicht in Form gebracht werden können.

Beispiel 8 (Vergleichsversuch)

100 Teile Präpolymer II werden bei 70 °C mit 13,37 Teilen des Diamins aus Beispiel 2 vermischt ($NCO:NH_2$ = 1,1:1). Das reagierende Gemisch bleibt 1 Minute giessbar, wird in eine vorgeheizte Form gegossen und kann nach 2 Minuten bei 110 °C entformt werden. Das Elastomer hat nach 24stündiger Temperzeit bei 110 °C folgende mechanische Eigenschaften:

| | | |
|---|---|---|
| Zugfestigkeit | (DIN 53 504) | 29,9 MPa |
| Bruchdehnung | (DIN 53 504) | 656% |
| Weiterreisswiderstand | (DIN 53 515) | 38 KN/m |
| Shore-Härte A | (DIN 53 505) | 91 |
| Elastizität | (DIN 53 512) | 40% |

Beispiel 9

100 Teile Präpolymer II werden bei 70 °C mit 10,4 Teilen 2,4′-Diaminodiphenylsulfid vermischt ($NCO:NH_2$ = 1,1:1). Das reagierende Gemisch bleibt 35 Minuten giessbar, wird in eine vorgeheizte Form gegossen und kann nach 10 Minuten entformt werden. Nach 24stündiger Temperzeit bei 110 °C hat das Elastomer folgende mechanische Eigenschaften:

| | | |
|---|---|---|
| Zugfestigkeit | (DIN 53 504) | 31,4 MPa |
| Bruchdehnung | (DIN 53 504) | 815% |
| Weiterreisswiderstand | (DIN 53 515) | 38,5 KN/m |
| Shore-Härte A | (DIN 53 505) | 81 |
| Elastizität | (DIN 53 512) | 38% |

Beispiel 10

100 Teile Präpolymer II werden bei 70 °C mit 11,85 Teilen 2,4′-Diamino-5-methoxy-diphenylsulfid vermischt. ($NCO:NH_2$ = 1,1:1). Das reagierende Gemisch bleibt 3 Minuten giessbar, wird in eine vorgeheizte Form gegossen und kann nach 10 Minuten bei 110 °C entformt werden. Nach 24stündiger Temperzeit bei 110 °C werden folgende mechanische Werte gemessen:

| | | |
|---|---|---|
| Zugfestigkeit | (DIN 53 504) | 30,1 MPa |
| Bruchdehnung | (DIN 53 504) | 792% |
| Weiterreisswiderstand | (DIN 53 515) | 39,8 KN/m |
| Shore-Härte A | (DIN 53 505) | 83 |
| Elastizität | (DIN 53 512) | 37% |

## Patentansprüche

1. Polyurethanharnstoffe mit aromatischen, Schwefel enthaltenden Harnstoffgruppen, dadurch gekennzeichnet, dass die Harnstoffgruppen die Strukturformel

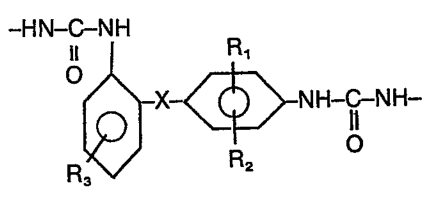

aufweisen, in welcher

X für $-S-$, $-\underset{\underset{O}{\|}}{S}-$ oder $-\overset{\overset{O}{\|}}{\underset{\underset{O}{\|}}{S}}-$ steht,

$R_1$ und $R_2$ gleich oder verschieden sind und Wasserstoff, einen Alkylrest, eine Alkoxy- oder eine Alkylmercaptogruppe mit 1 bis 4 C-Atomen darstellen und

$R_3$ Wasserstoff, Halogen, eine Alkoxy- oder eine Alkylmercaptogruppe mit 1 bis 4 C-Atomen, $-COR_4$, $-COOR_4$, $-\underset{\underset{O}{\|}}{C}-NR_4R_5$, $-SO_2-R_4$ oder $-SO_2-NR_4R_5$ bedeutet, wobei

$R_4$ und $R_5$ unabhängig voneinander für einen linearen oder verzweigten aliphatischen Rest mit 1 bis 4 C-Atomen stehen.

2. Polyurethanharnstoffe nach Anspruch 1, dadurch gekennzeichnet, dass die Harnstoffgruppen die Struktur

a) 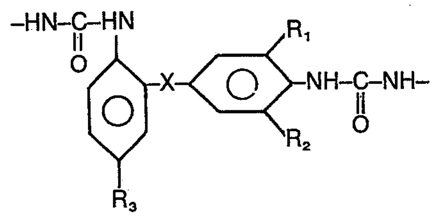

und/oder

b) 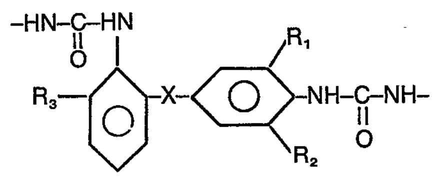

aufweisen.

3. Polyurethanharnstoffe nach Anspruch 1, dadurch gekennzeichnet, dass $R_1$, $R_2$ und $R_3$ für Wasserstoff stehen.

4. Verfahren zur Herstellung von Polyurethanharnstoffen durch gegebenenfalls stufenweise Umsetzung von

A) Polyisocyanaten,

B) Verbindungen mit mindestens 2 gegenüber Isocyanaten reaktiven Wasserstoffatomen und einem Molekulargewicht von 400 bis 10 000,

C) schwefelhaltigen aromatischen Diaminen als Kettenverlängerungsmittel, gegebenenfalls

D) weiteren gegenüber Isocyanaten reaktiven Verbindungen mit einem Molekulargewicht von 32 bis 400, gegebenenfalls in Anwesenheit von

E) Treibmitteln, Aktivatoren und weiteren an sich bekannten Zusatzstoffen,

dadurch gekennzeichnet, dass als Komponente C) Diamine der allgemeinen Formel

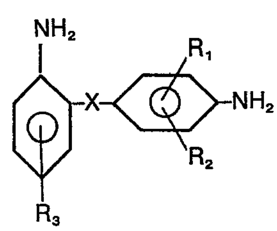

eingesetzt werden, in der X, $R_1$, $R_2$ und $R_3$ die in Anspruch 1 angegebene Bedeutung haben.

5. Verfahren nach Anspruch 4, dadurch gekennzeichnet, dass ein Diamin der allgemeinen Formel

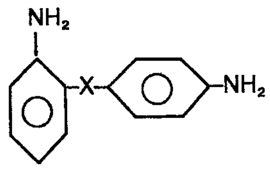

eingesetzt wird.

6. Verfahren nach Anspruch 4 oder 5, dadurch gekennzeichnet, dass das schwefelhaltige aromatische Diamin C) in einer Menge von mehr als 50 Mol-%, bezogen auf Gesamtmenge der Kettenverlängerungsmittel, eingesetzt wird.

**Claims**

1. Polyurethane ureas containing aromatic, sulphur-containing urea groups, characterised in that the urea groups have the structural formula

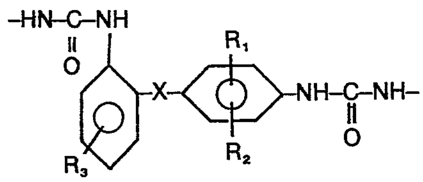

in which

X represents $-S-$, $-\underset{\underset{O}{\|}}{S}-$ or $-\overset{\overset{O}{\|}}{\underset{\underset{O}{\|}}{S}}-$,

$R_1$ and $R_2$ are identical or different and represent hydrogen, an alkyl radical, an alkoxy or an alkylmercapto group containing 1 to 4 C atoms and

$R_3$ denotes hydrogen, halogen, an alkoxy or an alkylmercapto group containing 1 to 4 C atoms, $-COR_4$, $-COOR_4$, $-\underset{\underset{O}{\|}}{C}-NR_4R_5$, $-SO_2-R_4$ or $-SO_2-NR_4R_5$, wherein

$R_4$ and $R_5$ independently of one another represent a linear or branched aliphatic radical containing 1 to 4 C atoms.

2. Polyurethane ureas according to Claim 1, characterised in that the urea groups have the structure

a) 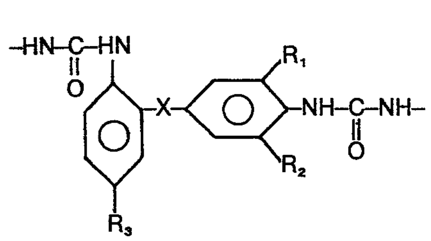

and/or

b) 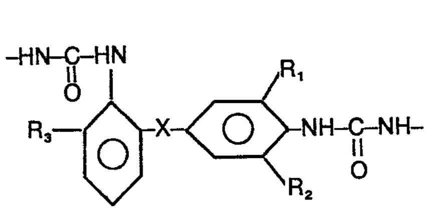

3. Polyurethane ureas according to Claim 1, characterised in that $R_1$, $R_2$ and $R_3$ represent hydrogen.

4. Process for the production of polyurethane ureas by reacting, optionally stepwise,

A) polyisocyanates,

B) compounds containing at least 2 isocyanate-reactive hydrogen atoms and having a molecular weight of 400 to 10,000,

C) sulphur-containing aromatic diamines as chain-extending agents, optionally

D) other isocyanate-reactive compounds having a molecular weight of 32 to 400, optionally in the presence of

E) blowing agents, activators and other known additives,

characterised in that diamines of the general formula

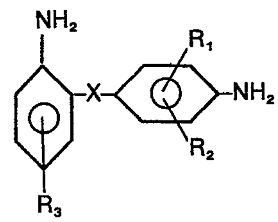

in which

X, $R_1$, $R_2$ and $R_3$ have the meaning indicated in Claim 1, are used as component C).

5. Process according to Claim 4, characterised in that a diamine of the general formula

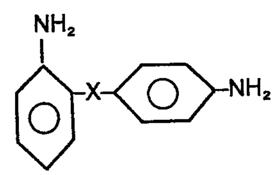

is used.

6. Process according to Claim 4 or 5, characterised in that the sulphur-containing aromatic diamine C) is used in a quantity of more than 50 mole%, based on the total quantity of chain-extending agents.

**Revendications**

1. Polyuréthanne-urées à groupes urée aromatiques contenant du soufre, caractérisées en ce que les groupes urée répondent à la formule

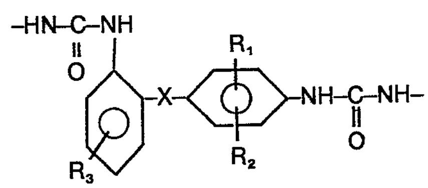

dans laquelle

X représente

$-S-$, $-\underset{\underset{O}{\|}}{S}-$ ou $-\overset{\overset{O}{\|}}{\underset{\underset{O}{\|}}{S}}-$,

$R_1$ et $R_2$ sont égaux ou différents et représentent de l'hydrogène, un reste alkyle, un groupe alkoxy ou un groupe alkylmercapto ayant 1 à 4 atomes de carbone et

$R_3$ représente de l'hydrogène, un halogène, un groupe alkoxy ou un groupe alkylmercapto ayant 1 à 4 atomes de carbone, un groupe $-COR_4$, $-COOR_4$, $-\underset{\underset{O}{\|}}{C}-NR_4R_5$, $-SO_2-R_4$ ou $-SO_2-NR_4R_5$,

$R_4$ et $R_5$ représentant, indépendamment l'un de l'autre, un reste aliphatique linéaire ou ramifié ayant 1 à 4 atomes de carbone.

2. Polyuréthanne-urées suivant la revendication 1, caractérisées en ce que les groupes urée répondent à la formule

a) 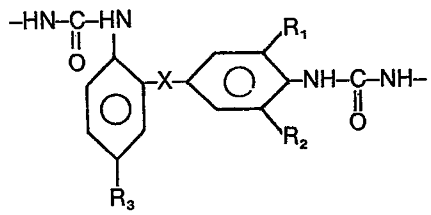

et/ou

b) 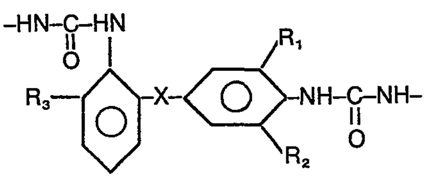

3. Polyuréthanne-urées suivant la revendication 1, caractérisées en ce que $R_1$, $R_2$ et $R_3$ représentent de l'hydrogène.

4. Procédé de production de polyuréthanne-urées par réaction éventuellement par étapes

A) de polyisocyanates,

B) de composés portant au moins deux atomes d'hydrogène réactifs envers des isocyanates et ayant un poids moléculaire de 400 à 10 000,

C) de diamines aromatiques contenant du soufre comme agents d'allongement de chaîne, éventuellement

D) d'autres composés réactifs envers des isocyanates, ayant un poids moléculaire de 32 à 400, éventuellement en présence

E) de porogènes, d'activateurs et d'autres additifs connus,

caractérisé en ce qu'on utilise comme composant C) des diamines de formule générale

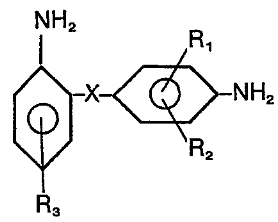

dans laquelle X, $R_1$, $R_2$ et $R_3$ ont la définition indiquée dans la revendication 1.

5. Procédé suivant la revendication 4, caractérisé en ce qu'on utilise une diamine de formule générale

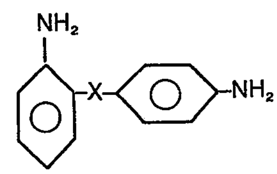

6. Procédé suivant la revendication 4 ou 5, caractérisé en ce qu'on utilise la diamine aromatique C) contenant du soufre en une quantité de plus de 50 moles%, par rapport à la quantité totale des agents d'allongement de chaîne.